# EUROPÄISCHE PATENTSCHRIFT

(11) **EP 3 124 175 B1**
(45) Veröffentlichungstag und Bekanntmachung des Hinweises auf die Patenterteilung: **10.10.2018**
(21) Anmeldenummer: 16001634.1
(22) Anmeldetag: 26.07.2016
(51) Int. Cl.: B24B 1/00, B24B 13/04, B24B 13/06, B24B 13/00

(54) **VERFAHREN ZUR BEARBEITUNG VON OPTISCHEN WERKSTÜCKEN, INSBESONDERE BRILLENLINSEN AUS KUNSTSTOFF**
METHOD FOR MACHINING OPTICAL WORKPIECES, IN PARTICULAR PLASTIC SPECTACLE LENSES
PROCEDE DE TRAITEMENT DE PIECES USINEES OPTIQUES, EN PARTICULIER LENTILLES DE LUNETTE EN MATIERE PLASTIQUE

(30) Priorität: 31.07.2015 DE 102015009973
(43) Veröffentlichungstag der Anmeldung: 01.02.2017
(73) Patentinhaber: Satisloh AG, 6340 Baar (CH)
(72) Erfinder: Mappes, Thomas, 35428 Langgöns (DE)
(74) Vertreter: Oppermann, Mark

(56) Entgegenhaltungen:
- WO-A1-2011/042091
- WO-A1-2012/007654

## Beschreibung

### TECHNISCHES GEBIET

Die vorliegende Erfindung bezieht sich allgemein auf ein Verfahren zur Bearbeitung von optischen Werkstücken gemäß dem Oberbegriff des Patentanspruchs 1. Insbesondere bezieht sich die Erfindung auf ein Verfahren zur Bearbeitung von Brillenlinsen aus Kunststoff, beispielsweise Polycarbonat, CR39 oder sogenannte "High Index" Materialien, wie es in sogenannten "RX-Werkstätten", d.h. Produktionsstätten zur Fertigung von individuellen Brillenlinsen nach Rezept in sehr großem Umfang praktiziert wird.

### STAND DER TECHNIK

In RX-Werkstätten werden gemäß z.B. der den Oberbegriff des Patentanspruchs 1 bildenden Druckschrift EP 1 593 458 A2 in der Regel die folgenden Prozessschritte durchlaufen: Zunächst wird ein geeigneter rechter und/oder linker Brillenlinsenrohling aus einem Halbfabrikatlager entnommen. Halbfabrikat insofern, als die in einer Draufsicht gesehen in der Regel runden oder ovalen, noch nicht gerandeten Brillenlinsenrohlinge bereits an einer ihrer jeweils zwei optisch wirksamen Flächen fertigbearbeitet sind. Sodann werden die Brillenlinsenrohlinge für den Blockvorgang vorbereitet, nämlich durch Aufbringen einer geeigneten Schutzfolie oder eines geeigneten Schutzlacks zum Schutz der bereits fertigbearbeiteten optisch wirksamen Fläche.

Als Nächstes erfolgt das sogenannte "Blocken" der Brillenlinsenrohlinge. Hierbei wird der Brillenlinsenrohling mit einem geeigneten Blockstück, z.B. einem Blockstück gemäß der deutschen Norm DIN 58766 verbunden. Dazu wird das Blockstück zunächst in eine vorgegebene Position gegenüber der geschützten, bereits fertigbearbeiteten Fläche des Brillenlinsenrohlings gebracht und in dieser Position sodann der Raum zwischen Blockstück und Brillenlinsenrohling mit einem geschmolzenen Material ("Alloy", d.h. einer in der Regel Wismut-basierten metallischen Legierung, oder Wachs) ausgefüllt. Nach Erstarren des Füllmaterials stellt das Blockstück eine Aufnahme zur Bearbeitung des Brillenlinsenrohlings dar, die in der Folge bei mehreren Bearbeitungsvorgängen an der Brillenlinse verbleibt und diese dabei zuverlässig halten muss. Als Alternative zu den vorgenannten, erstarrenden Blockmaterialien wurde auch schon vorgeschlagen (DE 10 2007 007 161 A1, EP 2 011 604 A1), einen speziellen - ggf. unter UV-Licht - aushärtenden Klebstoff zu verwenden, um Blockstück und Brillenlinsenrohling zu verbinden, mit dem Klebstoff als Schicht dazwischen.

Erst dann können die Brillenlinsenrohlinge je nach Werkstoff - bei Kunststoff mittels geometrisch bestimmter Schneide, d.h. regelmäßig Fräsen und/oder Drehen - in einer Bearbeitungsmaschine (siehe hierzu z.B. die Druckschriften EP 1 719 585 A2 und EP 2 011 603 A1) spanend vorbearbeitet werden. Hierbei erhält die vorher noch nicht bearbeitete optisch wirksame Fläche des jeweiligen Brillenlinsenrohlings ihre Makrogeometrie (optisch aktive Form) gemäß Rezept.

Sodann erfolgt die spanende Feinbearbeitung der Brillenlinsen, bei der die vorbearbeitete optisch wirksame Fläche der jeweiligen Brillenlinse die gewünschte Mikrogeometrie (Oberflächengüte) erhält, und zwar mittels geometrisch unbestimmter Schneide. In Abhängigkeit von u.a. dem Werkstoff der Brillenlinsen unterteilt sich die Feinbearbeitung in einen Feinschleifvorgang und einen sich daran anschließenden Poliervorgang (siehe hierzu beispielsweise die Druckschriften EP 1 473 116 A1 und EP 1 698 432 A2), oder beinhaltet, falls bei der Vorbearbeitung bereits eine polierfähige Fläche erzeugt wurde, lediglich einen Poliervorgang in einer Poliermaschine (siehe hierzu etwa die Druckschrift EP 2 308 644 A2).
Erst nach dem Poliervorgang wird die Brillenlinse vom Blockstück getrennt (sogenanntes "Abblocken") bevor sich schließlich Reinigungsschritte und ggf. weiterführende Veredelungsschritte, z.B. eine Entspiegelung oder Hartbeschichtung der Brillenlinsen, und das sogenannte "Edgen", d.h. die Bearbeitung des Randes der jeweiligen Brillenlinse entsprechend der Form des Brillengestells in einer Randbearbeitungsvorrichtung (sogenannte "Edger"; siehe hierzu z.B. die Druckschrift EP 1 243 380 A2) anschließen.
In RX-Werkstätten sind nun Brillenlinsen in allen Größen zu bearbeiten, insbesondere auch sehr kleine Brillenlinsen. Solche, für sehr kleine Brillengestelle von z.B. reinen Lesebrillen oder Kinderbrillen benötigten Brillenlinsen stellen in RX-Werkstätten allerdings immer eine Herausforderung dar. Dies beginnt schon mit dem Blocken, bei dem für sehr kleine Brillenlinsen üblicherweise spezielle Blockstücke oder Blockringe mit Aufsatzringen vorzuhalten sind. Für eine Fräsbearbeitung von sehr kleinen Brillenlinsen ist sodann ein Fräswerkzeug mit kleinem Durchmesser einzusetzen, was im Prozess zumeist einen Werkzeugwechsel bedingt.
Auch die Polierbearbeitung von sehr kleinen Brillenlinsen wirft Probleme auf: Üblicherweise wird in der Brillenlinsenfertigung mit flexiblen, d.h. anpassfähigen Werkzeugen poliert (siehe hierzu z.B. die Druckschrift WO 2011/018212 A1 mit weiteren Zitaten). Polieren diese Werkzeuge bei sehr kleinen Brillenlinsen über den Linsenrand, besteht die Gefahr, dass an der Brillenlinse in unerwünschter Weise eine glänzende Kante mit daran anschließenden matten Flächenbereichen entsteht; außerdem besteht die Gefahr, dass sich der Linsenrand in das Polierwerkzeug "einarbeitet" und dessen bearbeitungsaktive Fläche beschädigt. Ein Verfahren gemäß dem Oberbegriff von Anspruch 1 zeigt auch die WO 2011/042091 A1.

Vor diesem Hintergrund ist es in manchen RX-Werkstätten gängige Praxis, sehr kleine Brillenlinsen vor der Polierbearbeitung heraus zu sortieren und sodann mit starren Formwerkzeugen oder "alten" anpassfähigen Polierwerkzeugen zu bearbeiten, die hierbei kaputt gehen dürfen. Auch dies bedingt indes zusätzliche Schritte und Umrüstarbeiten, was in der Massenfertigung letztendlich einen leidigen Mehraufwand darstellt.

Wünschenswert wäre es, wenn auch sehr kleine Brillenlinsen im Prozess für "normal große" Brillenlinsen verbleiben könnten und keiner aufwändigen Sonderbehandlung bedürften.

### AUFGABENSTELLUNG

Der Erfindung liegt demgemäß die Aufgabe zugrunde, ausgehend vom Stand der Technik, wie er etwa in der gattungsbildenden Druckschrift EP 1 593 458 A2 beschrieben wird, ein möglichst einfaches Verfahren zur Bearbeitung von optischen Werkstücken, insbesondere Brillenlinsen aus Kunststoff bereitzustellen, mit dem auch verhältnismäßig kleine Werkstücke, z.B. Brillenlinsen für Kinderbrillen, problemlos bearbeitet werden können.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 8.

Bei einem Verfahren zur Bearbeitung von optischen Werkstücken, insbesondere Brillenlinsen aus Kunststoff, welche eine erste Fläche und eine davon abgewandte zweite Fläche aufweisen, die zu bearbeiten ist, welches Verfahren die folgenden, in der angegebenen Reihenfolge ablaufenden Hauptschritte umfasst: (i) Blocken des Werkstücks vermittels eines Blockmaterials auf einem Blockstück als Handhabe bei der Bearbeitung, so dass sich das Blockmaterial zwischen dem Blockstück und der ersten Fläche des Werkstücks befindet; (ii) Bearbeiten des Werkstücks mit geometrisch bestimmter Schneide zur Erzielung der gewünschten Makrogeometrie an der zweiten Fläche des Werkstücks; (iii) Bearbeiten des Werkstücks mit geometrisch unbestimmter Schneide zur Erzielung der gewünschten Mikrogeometrie an der zweiten Fläche des Werkstücks; und (iv) Abblocken des Werkstücks von dem Blockstück; weist der Hauptschritt (ii) des Bearbeitens des Werkstücks mit geometrisch bestimmter Schneide erfindungsgemäß (ii.2) einen Einstech-Unterschritt auf, bei dem mit geometrisch bestimmter Schneide ausgehend von der zweiten Fläche ein umlaufender Einstich erzeugt wird, der durch die erste Fläche hindurch bis ins Blockmaterial hineinreicht, so dass auf dem Blockstück radial innerhalb des Einstichs das Werkstück mit einer vorbestimmten Randkontur und radial außerhalb des Einstichs ein Restring zur Werkzeugabstützung im Hauptschritt (iii) verbleibt.

Mit anderen Worten gesagt wird vor dem Hauptschritt (iii) des (Fein)Bearbeitens des Werkstücks mit geometrisch unbestimmter Schneide - d.h. den ggf. Schleif- und jedenfalls Polierprozessschritten - der Werkstückrohling durch den umlaufenden Einstich in ein radial inneres Teilstück, welches später das im Verhältnis zum Werkstückrohling deutlich kleinere Werkstück bildet, und ein radial äußeres, ringförmiges Teilstück (Restring) unterteilt, das ebenfalls auf dem Blockstück verbleibt und bei der weiteren Bearbeitung zur Werkzeugabstützung dient. Das radial innere, eigentliche, kleine Werkstück kann dann so weiter bearbeitet werden wie ein großes oder "normales" Werkstück, wobei sich die zum Einsatz kommenden (Fein)Bearbeitungswerkzeuge mit geometrisch unbestimmter Schneide an dem Restring abstützen können. Nach der Bearbeitung werden der Restring und das Werkstück abgeblockt, der Restring entsorgt und das Werkstück ggf. weiter behandelt.

In dem eingangs beschriebenen Fall der Bearbeitung von Brillenlinsen müssen somit weder besondere Blockstücke für kleine Brillenlinsen vorgehalten werden noch müssen andere Werkzeuge für die Bearbeitung kleiner Brillenlinsen vorgesehen werden oder gar kleine Brillenlinsen aus dem Standardprozessablauf separiert und gesondert behandelt werden. Die Qualität der mit dem erfindungsgemäßen Verfahren bearbeiteten kleinen Brillenlinsen unterscheidet sich im Ergebnis nicht von der guten Qualität größerer Brillenlinsen. Glänzende Kanten, matte Flächenbereiche und andere Ungenauigkeiten der polierten kleinen Brillenlinsen, wie sie im Stand der Technik immer wieder auftraten, werden infolge der Randabstützung der Polierwerkzeuge vermittels des Restrings zuverlässig vermieden, nachdem diese eine Polierbearbeitung wie bei einer großen oder "normalen" Brillenlinse ermöglicht. Die durch den Restring erzielte Randabstützung verhindert bei der Bearbeitung auch ein Ab- oder Wegkippen des Polierwerkzeugs von der Brillenlinse und ein damit im Stand der Technik manchmal einhergehendes Verklemmen zwischen Werkstück und Werkzeug. Darüber hinaus werden im Vergleich zum konventionellenVorgehen die flexiblen Polierwerkzeuge geschont und deren Standzeiten verlängert. Nicht zuletzt entfallen die im Stand der Technik notwendigen (Um)Rüstarbeiten und die Bearbeitung wird insgesamt effizienter.

Umfasst der Hauptschritt (ii) des Bearbeitens des Werkstücks mit geometrisch bestimmter Schneide als weitere Unterschritte (ii.1) ein Fräsen des Werkstücks an der zweiten Fläche mittels eines Fräswerkzeugs zur Erzielung der gewünschten groben Makrogeometrie und (ii.3) ein Drehen des Werkstücks an der zweiten Fläche mittels eines Drehwerkzeugs zur Erzielung der gewünschten feinen Makrogeometrie, so kann der Einstech-Unterschritt (ii.2) grundsätzlich vor dem Fräs-Unterschritt (ii.1) oder nach dem Dreh-Unterschritt (ii.3) ausgeführt werden. Im ersten Fall (vor dem Fräsen) werden jedoch relativ lange Einstech-Werkzeuge und Bearbeitungszeiten benötigt, um durch das Werkstück hindurch bis zum Blockmaterial zu gelangen; im zweiten Fall (nach dem Drehen) muss besondere Sorgfalt darauf verwendet werden, beim Erzeugen des Einstichs die just überdrehte zweite Fläche des Werkstücks nicht zu beschädigen. Bevorzugt ist deshalb eine Verfahrensausgestaltung, bei der der Einstech-Unterschritt (ii.2) zwischen dem Fräs-Unterschritt (ii.1) und dem Dreh-Unterschritt (ii.3) stattfindet.

In einer bevorzugten ersten Variante kann ferner für die Erzeugung des Einstichs im Einstech-Unterschritt (ii.2) ein drehfest gehaltener schmaler Drehmeißel verwendet werden. Dies erfordert freilich einen Drehantrieb für das Werkstück, um die für ein Zerspanen notwendige Relativgeschwindigkeit zwischen Werkstück und Werkzeug zu erzeugen, sowie eine Möglichkeit der relativen Drehmeißelzustellung bezüglich des Werkstücks, was im Fall einer Drehbearbeitung der optisch wirksamen Flächen an Brillenlinsen maschinenseitig aber ohnehin beides vorhanden ist. In einer alternativen, gleichwohl ebenfalls bevorzugten zweiten Variante kann für die Erzeugung des Einstichs im Einstech-Unterschritt (ii.2) ein drehend angetriebener Fingerfräser verwendet werden. Die Maschinenkinematik der Bearbeitungsvorrichtung muss in diesem Fall natürlich so ausgelegt sein, dass ausgehend von der zweiten Fläche ein umlaufender Einstich im Werkstück erzeugt werden kann, sei es durch geeignetes Bewegen des Fingerfräsers und/oder des Werkstücks. Sogenannte "Generatoren" zur Flächenbearbeitung von Brillenlinsen, wie sie z.B. in den Druckschriften EP 1 719 585 A2 oder EP 2 011 603 A1 beschrieben werden, besitzen jedenfalls ohne Weiteres die hierfür erforderliche Konstellation von Bewegungsachsen.

Im weiteren Verfolg des Erfindungsgedankens kann vor dem Hauptschritt (iii) des Bearbeitens des Werkstücks mit geometrisch unbestimmter Schneide ein Übergangsbereich zwischen dem Einstich und der zweiten Fläche angefast oder abgerundet werden. Durch diese Maßnahme wird in vorteilhafter Weise dafür Sorge getragen, dass ein flexibles Polierwerkzeug im Hauptschritt (iii) des Bearbeitens des Werkstücks mit geometrisch unbestimmter Schneide beim Überfahren des umlaufenden Einstichs keinem vergrößerten Verschleiß unterliegt. Dabei kann der Übergangsbereich zwischen dem Einstich und der zweiten Fläche mittels des Drehwerkzeugs im Dreh-Unterschritt (ii.3) angefast oder abgerundet werden, so dass die Fase oder Abrundung vorteilhaft in einem Arbeitsgang mit ein und demselben Werkzeug kantenfrei bzw. mit glatten Übergängen erzeugt werden kann. Alternativ hierzu kann der Übergangsbereich zwischen dem Einstich und der zweiten Fläche aber auch mittels des Fingerfräsers am Anfang und/oder Ende des Einstech-Unterschritts (ii.2) angefast oder abgerundet werden, wozu der drehangetriebene Fingerfräser beim axialen Eintauchen in die zweite Fläche des Werkstücks zur Erzeugung des Einstichs bzw. beim axialen Herausfahren aus dem gerade erzeugten Einstich auch einen bezüglich der Werkstück-drehachse radialen Vorschub erfährt.

Besonders vorteilhaft ist es schließlich, wenn im Einstech-Unterschritt (ii.2) eine Randkontur am Werkstück erzeugt wird, die der Umfassungskontur einer Fassung für das Werkstück entspricht oder der Umfassungskontur der Fassung für das Werkstück bis auf ein geringfügiges Übermaß entspricht. So kommt dem Einstech-Unterschritt (ii.2) im Hinblick auf die final gewünschte Werkstückgeometrie vorteilhaft schon eine echte formgebende Funktion zu, bei der entweder ein Fertigranden des Werkstücks schon im Generator erfolgt oder ein späteres Fertigranden mit weniger Spanvolumen und Aufwand verbunden ist. Bei geeigneter Geometrie des Einstech-Werkzeugs kann hierbei sogar eine Dach- oder Spitzfacette am Rand des Werkstücks erzeugt werden - etwa vermittels eines Fingerfräsers, der in seinen Umfangsschneiden mit auf einer Höhe liegenden V-förmigen Nuten versehen ist und am Ende des Einstech-Unterschritts ohne axialen Vorschub bezüglich des Werkstücks nach radial innen zugestellt und nach entsprechender Rückstellung nach radial außen wieder aus dem Einstich axial herausgezogen wird.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, in denen gleiche Bezugszeichen gleiche bzw. entsprechende Teile kennzeichnen. In den Zeichnungen zeigen:
- Fig. 1: ein Ablaufdiagramm eines Verfahrens zur Bearbeitung von Brillenlinsen aus Kunststoff, mit den vier Hauptschritten (i) Blocken, (ii) Vorbearbeitung, (iii) Feinbearbeitung und (iv) Abblocken/Vergüten sowie der Besonderheit, dass der Hauptschritt der Vorbearbeitung (ii) einen Einstech-Unterschritt (ii.2) zur Erzeugung eines umlaufenden, stirnseitigen Einstichs umfasst, der die radial innere, eigentliche Brillenlinse von einem radial äußeren Restring des Brillenlinsenrohlings trennt;
- Fig. 2: eine perspektivische Ansicht eines auf einem Blockstück mittels eines Blockmaterials geblockten Brillenlinsenrohlings nach Erzeugen des umlaufenden, stirnseitigen Einstichs in dem Einstech-Unterschritt (ii.2) des Verfahrens gemäß Fig. 1;
- Fig. 3: eine Schnittansicht der in Fig. 2 gezeigten Einheit aus Blockstück, Blockmaterial und Brillenlinsenrohling;
- Fig. 4: eine abgebrochene, vergrößerte Schnittansicht der in Fig. 2 gezeigten Einheit aus Blockstück, Blockmaterial und Brillenlinsenrohling, entsprechend dem Detail IV in Fig. 3, wobei der bis in das Blockmaterial reichende, stirnseitige Einstich mittels eines schmalen Drehmeißels in einem Drehprozess erzeugt wurde;
- Fig. 5: eine im Hinblick auf den Bildausschnitt der Fig. 4 entsprechende, abgebrochene und vergrößerte Schnittansicht der in Fig. 2 gezeigten Einheit aus Blockstück, Blockmaterial und Brillenlinsenrohling, wobei der sich bis in das Blockmaterial erstreckende, stirnseitige Einstich mittels eines Fingerfräsers in einem Fräsprozess erzeugt wurde;
- Fig. 6: eine perspektivische Ansicht einer Maschine zur Bearbeitung von Brillenlinsen aus Kunststoff mit geometrisch bestimmter Schneide, von schräg vorne / oben links, ohne Maschinenoberteil (welches für eine bessere Einsicht in das Maschineninnere abgenommen wurde), deren werkzeugmäßige Ausstattung eine Fräs-Bearbeitungseinheit mit einer Werkzeugspindel und zwei Dreh-Bearbeitungseinheiten mit jeweils einem Fast-Tool-Servo umfasst, als Beispiel für eine Maschine, in der auch der stirnseitige Einstich gemäß den Fig. 2 bis 5 erzeugt werden kann;
- Fig. 7: eine Draufsicht auf die Maschine gemäß Fig. 6 mit Blickrichtung von oben in Fig. 6, wobei die Maschine links unten eine freigelassene Flanschfläche für eine hier nicht gezeigte, weitere Bearbeitungseinheit zur Erzeugung des stirnseitigen Einstichs gemäß den Fig. 2 bis 5 aufweist;
- Fig. 8: eine abgebrochene und teilgeschnittene, perspektivische Ansicht der Maschine gemäß Fig. 6 im Bereich der Flanschfläche von Fig. 7, auf der als weitere Bearbeitungseinheit zur Erzeugung des stirnseitigen Einstichs gemäß Fig. 5 eine weitere Fräs-Bearbeitungseinheit mit einer Werkzeugspindel zum Antrieb eines Fingerfräsers montiert ist;
- Fig. 9: eine abgebrochene und teilgeschnittene, perspektivische Ansicht der Maschine gemäß Fig. 6 im Bereich der Flanschfläche von Fig. 7, auf der als weitere Bearbeitungseinheit zur Erzeugung des stirnseitigen Einstichs gemäß Fig. 4 eine weitere Dreh-Bearbeitungseinheit mit einem feststehenden Drehmeißelhalter montiert ist, der einen schmalen Drehmeißel trägt;
- Fig. 10: eine vergrößerte, perspektivische Ansicht des in Fig. 9 gezeigten, schmalen Drehmeißels zur Erzeugung des stirnseitigen Einstichs gemäß Fig. 4;
- Fig. 11: eine im Maßstab gegenüber Fig. 10 verkleinerte Seitenansicht des schmalen Drehmeißels von Fig. 10, mit Blickrichtung von vorne in Fig. 10;
- Fig. 12: eine Draufsicht auf den schmalen Drehmeißel von Fig. 10, mit Blickrichtung von oben in Fig. 10 und im Maßstab von Fig. 11;
- Fig. 13: eine Seitenansicht des schmalen Drehmeißels von Fig. 10, mit Blickrichtung von hinten in Fig. 10 und im Maßstab von Fig. 11;
- Fig. 14: eine perspektivische Ansicht eines Werkzeughalters von schräg vorne / oben links, der an einem der Fast-Tool-Servos der Maschine gemäß den Fig. 6 und 7 angebracht werden kann und zwei Drehmeißelaufnahmen aufweist, von denen die in Fig. 14 rechte Drehmeißelaufnahme mit einem Drehmeißel zur Flächenbearbeitung der Brillenlinsen bestückt ist, während in der in Fig. 14 linken Drehmeißelaufnahme der in den Fig. 10 bis 13 dargestellte, schmale Drehmeißel zur Erzeugung des stirnseitigen Einstichs gemäß Fig. 4 aufgenommen ist; und
- Fig. 15: eine perspektivische Ansicht des Werkzeughalters gemäß Fig. 14 von schräg hinten / oben rechts.

### DETAILLIERTE BESCHREIBUNG DER AUSFÜHRUNGSBEISPIELE

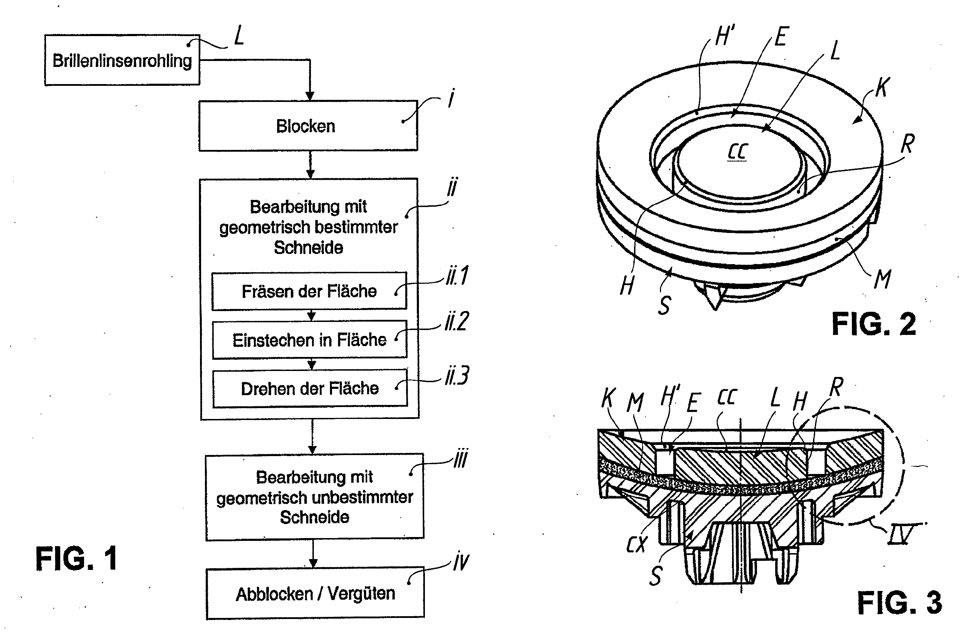

Die Fig. 1 zeigt ein Ablaufdiagramm eines Verfahrens zur Bearbeitung von Brillenlinsen L aus Kunststoff als optischen Werkstücken, die gemäß den Fig. 2 und 3 eine erste Fläche cx und eine davon abgewandte zweite Fläche cc aufweisen, von denen die zweite Fläche cc im Zuge des Verfahrens im Hinblick auf ihre optischen Eigenschaften zu bearbeiten ist. Das Verfahren umfasst gemäß Fig. 1 in an sich bekannter Weise die folgenden, in der angegebenen Reihenfolge ablaufenden Hauptschritte (siehe hierzu jeweils auch den eingangs zitierten Stand der Technik):
(i) Blocken der Brillenlinse L vermittels eines Blockmaterials M, insbesondere eines speziellen, z.B. lichtaushärtenden Klebstoffs auf einem Blockstück S als Handhabe bei der Bearbeitung, wie es etwa in der Druckschrift WO 2009/106296 A1 im Detail beschrieben wird, so dass sich das Blockmaterial M zwischen dem Blockstück S und der hiervon um die Dicke des Blockmaterials M beabstandeten ersten Fläche cx der Brillenlinse L befindet, wie in den Fig. 2 und 3 dargestellt;
(ii) (Vor)Bearbeiten der Brillenlinse L mit geometrisch bestimmter Schneide (z.B. Fräsen und/oder Drehen) zur Erzielung der gewünschten Makrogeometrie an der zweiten Fläche cc der Brillenlinse L;
(iii) (Fein)Bearbeiten der Brillenlinse L mit geometrisch unbestimmter Schneide (ggf. Schleifen und jedenfalls Polieren) zur Erzielung der gewünschten Mikrogeometrie an der zweiten Fläche cc der Brillenlinse L; und
(iv) Abblocken der Brillenlinse L von dem Blockstück S, mit sich daran nach Reinigung der Brillenlinse L ggf. anschließenden Vergütungsschritten (Beschichten und ggf. Fertigranden zur Einpassung der Brillenlinse L in eine Fassung bzw. ein Brillengestell).

Wesentlich ist hierbei, dass der Hauptschritt (ii) des (Vor)Bearbeitens der Brillenlinse L mit geometrisch bestimmter Schneide einen Einstech-Unterschritt (ii.2) umfasst, bei dem mit geometrisch bestimmter Schneide ausgehend von der zweiten Fläche cc ein umlaufender Einstich E im Brillenlinsenrohling erzeugt wird, der durch die erste Fläche cx hindurch bis in das Blockmaterial M hineinreicht, wie in den Fig. 2 bis 5 gezeigt, so dass auf dem Blockstück S radial innerhalb des Einstichs E die eigentliche Brillenlinse L mit einer vorbestimmten Randkontur R verbleibt, umgeben von einem radial äußeren Restring K des Brillenlinsenrohlings. Dieser Restring K dient insbesondere der axialen Abstützung des Werkzeugs bzw. der Werkzeuge im Feinbearbeitungsschritt (iii), so dass auch sehr kleine Brillenlinsen L wie große oder "normale" Brillenlinsen mit guter Qualität bearbeitet werden können, ohne dass hierfür im Blockschritt (i) oder im Feinbearbeitungsschritt (iii) besondere Maßnahmen - wie etwa der eingangs beschriebene Einsatz spezieller Blockstücke oder -ringe bzw. anderer, z.B. starrer oder alter Polierwerkzeuge - ergriffen werden müssten. Nach der Bearbeitung wird der Restring K im Abblockschritt (iv) zusammen mit der Brillenlinse L mit üblichen Abblockverfahren - beispielsweise mittels eines Hochdruck-Wasserstrahls, wie in der Druckschrift WO 2011/042091 A1 oder WO 2011/107227 A1 beschrieben - abgeblockt, worauf der Restring K entsorgt und die Brillenlinse L ggf. wie an sich bekannt weiterbehandelt werden kann.

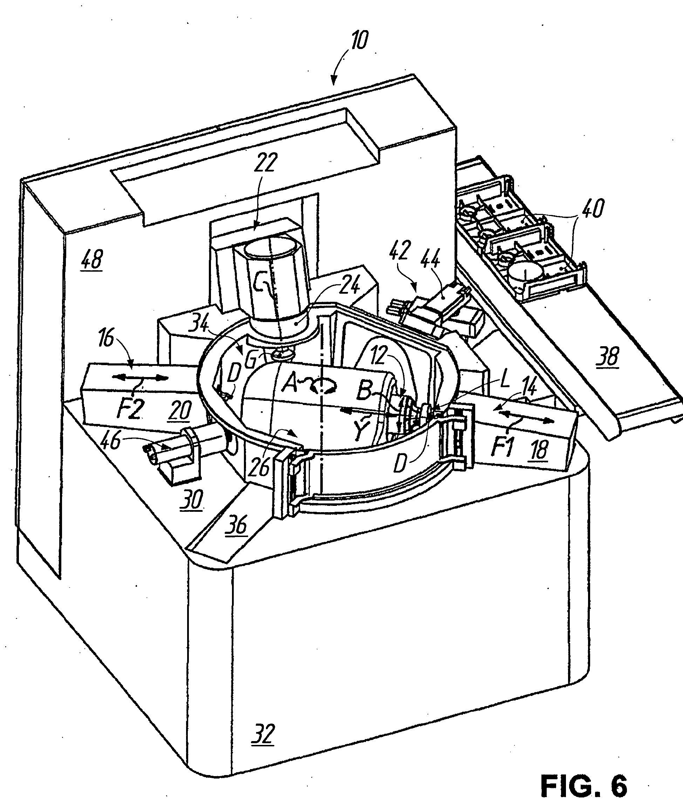

Umfasst der Hauptschritt (ii) des (Vor)Bearbeitens der Brillenlinse L mit geometrisch bestimmter Schneide in an sich bekannter Weise die folgenden weiteren Unterschritte: (ii.1) Fräsen der Brillenlinse L an der zweiten Fläche cc mittels eines Fräswerkzeugs G (siehe Fig. 6) zur Erzielung der gewünschten groben Makrogeometrie und (ii.3) Drehen der Brillenlinse L an der zweiten Fläche cc mittels eines Drehwerkzeugs D (vgl. wiederum Fig. 6) zur Erzielung der gewünschten feinen Makrogeometrie, so findet der Einstech-Unterschritt (ii.2) in dem hier illustrierten Verfahrensbeispiel zwischen dem Fräs-Unterschritt (ii.1) und dem Dreh-Unterschritt (ii.3) statt, was einerseits im Hinblick auf kurze Bearbeitungszeiten von Vorteil ist und andererseits die Gefahr bannt, dass es infolge des Einstech-Unterschritts (ii.2) zu einer Beschädigung der Makrogeometrie der zweiten Fläche cc kommt, wie schon eingangs erwähnt.

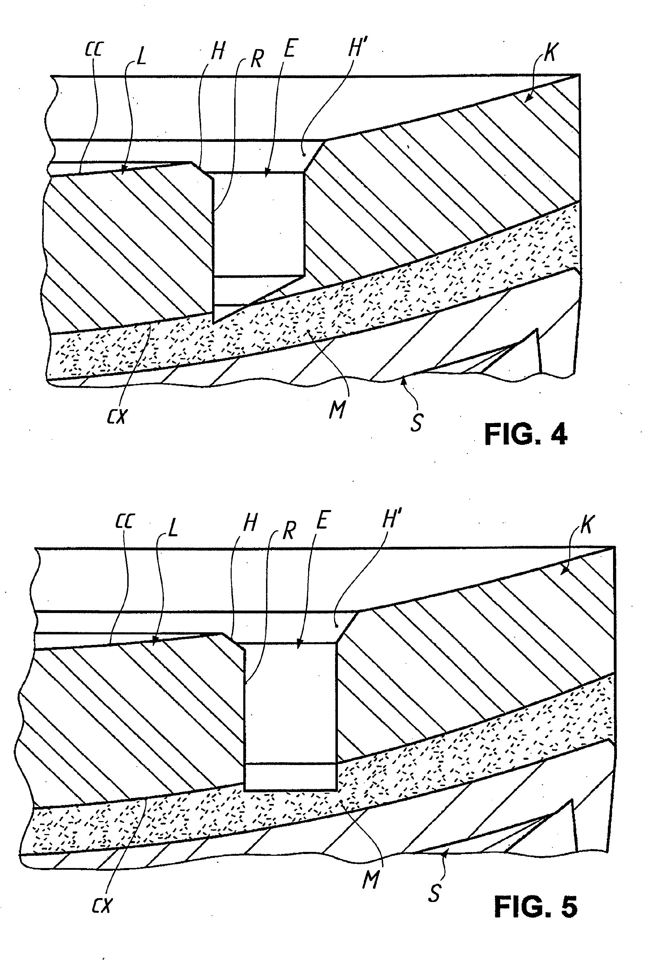

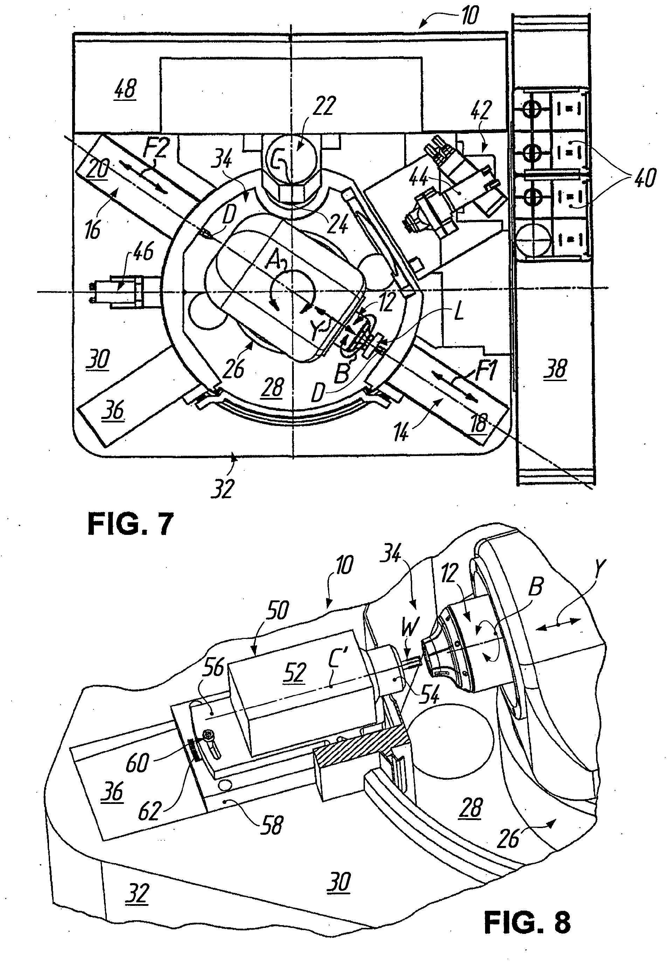

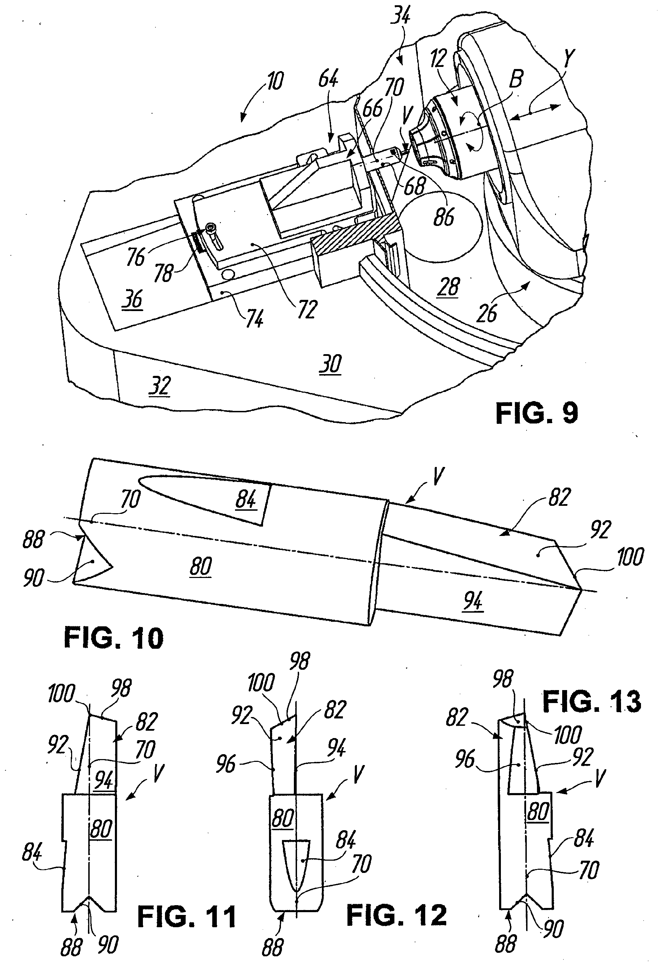

Nachdem die Bearbeitungs-Hauptschritte (i), (iii) und (iv) wie auch die Bearbeitungs-Unterschritte (ii.1) und (ii.3) dem Fachmann hinlänglich bekannt und durch den oben zitierten Stand der Technik - auf den hiermit zu verfahrens- und vorrichtungsseitigen Einzelheiten nochmals ausdrücklich verwiesen sei - dokumentiert sind, soll sich die nachfolgende Beschreibung vornehmlich mit dem Einstech-Unterschritt (ii.2) beschäftigen, namentlich der Geometrie des im Einstech-Unterschritt (ii.2) erzeugten, stirnseitigen Einstichs E in der Brillenlinse L sowie verfahrens- und vorrichtungstechnischen Maßnahmen zur Erzeugung dieses Einstichs E. Dabei werden zwei Verfahrensvarianten erläutert, nämlich zum einen die Erzeugung des Einstichs E gemäß Fig. 4 im Einstech-Unterschritt (ii.2) unter Verwendung eines drehfest gehaltenen schmalen Drehmeißels V, zu welcher Variante Einzelheiten in den Fig. 9 bis 15 gezeigt sind, und zum anderen die Erzeugung des Einstichs E gemäß Fig. 5 im Einstech-Unterschritt (ii.2) unter Verwendung eines drehend angetriebenen Fingerfräsers W, zu welcher Variante sich Einzelheiten aus der Fig. 8 ergeben. Bei beiden Verfahrensvarianten - Fräsprozess bzw. Drehprozess - kommt in den hier dargestellten Ausführungsbeispielen eine Maschine 10 ("Generator") zur Flächenbearbeitung von Brillenlinsen L zum Einsatz, die in den Fig. 6 und 7 gezeigt ist. Bei dieser Maschine 10 handelt es sich um den von der Satisloh AG, Baar, Schweiz erhältlichen Generator mit der Handelsbezeichnung "VFT-orbit", der Gegenstand der Druckschrift EP 2 011 603 A1 ist, auf die hiermit bezüglich Aufbau und Funktion der Maschine 10 zunächst ausdrücklich verwiesen sei.

Kurzgefasst besitzt die Maschine 10 gemäß den Fig. 6 und 7 eine Werkstückspindel 12, mittels der die auf dem Blockstück S aufgeblockte Brillenlinse L um eine Werkstück-Drehachse B drehend angetrieben werden kann. Ferner hat die Maschine 10 wenigstens eine, im dargestellten Ausführungsbeispiel sogar drei Bearbeitungseinheiten für die spanende Bearbeitung der an der Werkstückspindel 12 über das Blockstück S gehaltenen Brillenlinse L, nämlich zwei Dreh-Bearbeitungseinheiten 14, 16 mit jeweils einem Fast-Tool-Servo 18, 20, der dazu dient, eine Linearbewegung in Richtung F1 bzw. F2 für einen jeweils zugeordneten Drehmeißel D als Drehwerkzeug zu erzeugen, sowie eine Fräs-Bearbeitungseinheit 22 mit einer Werkzeugspindel 24 zur Erzeugung einer Drehbewegung um eine Werkzeug-Drehachse C für ein Fräswerkzeug G. Darüber hinaus weist die Maschine 10 einen allgemein mit 26 bezifferten Verstellmechanismus zur Erzeugung einer Relativbewegung zwischen der Werkstückspindel 12 und dem jeweiligen Werkzeug D, G auf, um (wenigstens) wahlweise ein Laden/ Entladen oder ein spanendes Bearbeiten der Brillenlinse L zu ermöglichen. Hierbei umfasst der Verstellmechanismus 26 eine Linearantriebseinheit sowie eine Schwenkantriebseinheit (beide in den Fig. 6 und 7 nicht zu sehen), die aufeinander angeordnet sind, wobei die Werkstückspindel 12 mittels der Schwenkantriebseinheit um eine Schwenkachse A schwenkbar ist, die im Wesentlichen senkrecht zur Werkstück-Drehachse B steht, während die Werkstückspindel 12 mittels der Linearantriebseinheit entlang einer Linearachse Y bewegbar ist, die im Wesentlichen senkrecht zur Schwenkachse A und im Wesentlichen parallel zur Werkstück-Drehachse B verläuft.

Der Verstellmechanismus 26 ist im Zentrum einer ringtrogartigen Ausnehmung 28 angeordnet, die ausgehend von einer Oberseite 30 mittig in einem monolithisch aus Polymerbeton geformten Maschinengestell 32 ausgebildet ist und einen Arbeitsraum 34 der Maschine 10 begrenzt. Um die Ausnehmung 28 herum sind, wie insbesondere die Fig. 7 zeigt, in einer sternartigen Anordnung ausgehend von der Oberseite 30 mehrere Flanschflächen 36 in das Maschinengestell 32 eingelassen, welche der Montage der Bearbeitungseinheiten 14, 16, 22 und weiterer Einheiten bzw. Stationen dienen, die nachfolgend noch beschrieben werden.

Die Fig. 6 und 7 zeigen schließlich auch (a) eine seitlich am Maschinengestell 32 montierte Transporteinrichtung 38 für den Transport von Arbeitskästen 40, in denen die zu bearbeitenden/ bearbeiteten Brillenlinsen L transportiert werden, (b) eine Lade/Entlade-Station 42 zum Laden/Entladen von Brillenlinsen L in die/aus der Maschine 10, mit einem Lademechanismus 44, der hinsichtlich seiner Bewegungsfreiheitsgrade und Greifmöglichkeiten angepasst ist, eine Brillenlinse L aus einem Arbeitskasten 40 herauszunehmen und in den Arbeitsraum 34 der Maschine 10 hineinzubewegen, um die geblockte Brillenlinse L an der Werkstückspindel 12 zu spannen, und umgekehrt, (c) eine Messstation 46 zum Vermessen der Brillenlinsen L sowie (d) einen am Maschinengestell 32 montierten Schaltschrank 48, der die benötigten Steuerungs- und Versorgungsbaugruppen enthält.

Was die Kinematik der vorbeschriebenen Maschine 10 angeht, ist insoweit festzuhalten, dass die Werkstückspindel 12 mittels des aus Linearantriebseinheit und Schwenkantriebseinheit bestehenden Verstellmechanismus 26 CNC-lagegeregelt (A-Achse, Y-Achse) in einer bezüglich der Schwenkachse A senkrecht verlaufenden Ebene bewegbar ist, während die Brillenlinse L im Drehwinkel CNC-lagegeregelt (B-Achse) um die Werkstück-Drehachse B drehbar ist. Somit kann die Brillenlinse L von einer Bearbeitungseinheit oder Station zur nächsten Bearbeitungseinheit oder Station bewegt werden (A-Achse), bezüglich einer Bearbeitungseinheit oder Station quer zu dieser (A-Achse, ggf. mit Y-Achse kombiniert, insbesondere für Vorschubbewegungen) und/oder bezüglich einer Bearbeitungseinheit oder Station in Richtung auf diese zu bzw. von dieser weg (Y-Achse, insbesondere für Zustellbewegungen). Werkzeugseitig kann dabei das Fräswerkzeug G mittels der Werkzeugspindel 24 um die Werkzeug-Drehachse C in der Drehzahl gesteuert drehend angetrieben werden bzw. der jeweilige Drehmeißel D mittels des zugeordneten Fast-Tool-Servos 18, 20 entlang der jeweiligen Linearachse F1, F2 CNC-lagegeregelt und nach Maßgabe der an der Brillenlinse L zu erzeugenden Flächenform reziprozierend zugestellt werden, um Späne abzuheben.

In den Fig. 6 und 7 links unten wurde die Flanschfläche 36 am Maschinengestell 32 freigelassen. Hier kann gemäß den Fig. 8 und 9 eine weitere Bearbeitungseinheit zur Erzeugung des stirnseitigen Einstichs E gemäß den Fig. 2 bis 5 angeordnet sein, wie nachfolgend beschrieben werden soll.

Gemäß Fig. 8 ist als weitere Bearbeitungseinheit zur Erzeugung des in Fig. 5 gezeigten stirnseitigen Einstichs E in der Brillenlinse L eine weitere Fräs-Bearbeitungseinheit 50 vorgesehen, die eine Frässpindel 52 mit einer Werkzeugaufnahme 54 zum Spannen des weiter oben erwähnten, langen und dünnen Fingerfräsers W aufweist, der in an sich bekannter Weise stirnseitig und am Umfang mit einer Mehrzahl von Schneiden versehen ist. Mittels der Frässpindel 52 kann der in der Werkzeugaufnahme 54 befestigte Fingerfräser W um eine Werkzeug-Drehachse C' in der Drehzahl gesteuert drehend angetrieben werden. Die Frässpindel 52 ist hierbei bezüglich des Maschinengestells 32 auf einer Höhe angeordnet, so dass sich die Werkzeug-Drehachse C' des Fingerfräsers W in einer durch die rotativen Achsen A und B definierten Schwenkebene der Werkstückspindel 12 befindet.

Die Frässpindel 52 ist ferner über einen Flansch 56 an einer Konsole 58 angeflanscht, die ihrerseits auf der Flanschfläche 36 des Maschinengestells 32 sitzt und an dieser auf geeignete Weise befestigt ist. Zwischen dem Flansch 56 und der Konsole 58 ist nahe der Werkzeugaufnahme 54 ein Stift (nicht dargestellt) eingefügt, um den der Flansch 56 und damit die Frässpindel 52 insgesamt bezüglich der Konsole 58 verschwenkt werden kann. Wie in Fig. 8 durch die Schraubverbindung mit Langloch bei 60 sowie die Skala 62 an der Konsole 58 angedeutet, kann somit die Werkzeug-Drehachse C' des Fingerfräsers W bezüglich der Schwenkachse A der Werkstückspindel 12 justiert werden bevor der Flansch 56 an der Konsole 58 festgezogen wird. Insbesondere ist eine derartige Justage der Frässpindel 52 am Maschinengestell 32 möglich, dass die Werkstückspindel 12 mittels der Schwenkantriebseinheit (nicht gezeigt) des Verstellmechanismus 26 um die Schwenkachse A in einer Stellung positioniert werden kann, in der die Werkstück-Drehachse B der Werkstückspindel 12 nahe der Werkzeug-Drehachse C' der Frässpindel 52 parallel zu dieser verläuft. Anstelle einer Schwenkverbindung zwischen Flansch 56 und Konsole 58 könnte die Verbindung indes auch so ausgestaltet sein, dass der Flansch 56 bezüglich der Konsole 58 zu Justagezwecken quer zur Werkzeug-Drehachse C' parallel verschoben werden kann. Für den Fachmann ist ersichtlich, dass durch diese Maßnahmen die Frässpindel 52 derart voreingestellt werden kann, dass für einen bestimmten Durchmesserbereich der zu bearbeitenden kleinen Brillenlinsen L der stirnseitige Einstich E so erzeugt werden kann (vgl. Fig. 5), dass die sich dabei ergebende Randkontur R der Brillenlinse L im Wesentlichen parallel zur Drehachse B der Brillenlinse L verläuft.

Bei dieser Ausgestaltung der Maschine 10 läuft der Einstech-Unterschritt (ii.2) im Wesentlichen wie folgt ab: Nach Fräsen der an der Werkstückspindel 12 gehaltenen Brillenlinse L mittels des von der Werkzeugspindel 24 angetriebenen Fräswerkzeugs G, um an der zweiten Fläche cc die gewünschten grobe Makrogeometrie zu erhalten, wird die Brillenlinse L mit der Werkstückspindel 12 um die Schwenkachse A verschwenkt, bis die Brillenlinse L dem Fingerfräser W an der Frässpindel 52 gegenüberliegt (in Fig. 8 wurde zur Vereinfachung der Darstellung die an der Werkstückspindel 12 gehaltene Brillenlinse L weggelassen). Das Verschwenken der Brillenlinse L um die Schwenkachse A erfolgt dabei nach Maßgabe des benötigten Durchmessers der Brillenlinse L soweit, dass sich an der Brillenlinse L ein bestimmter radialer Abstand zwischen der Werkstück-Drehachse B der Brillenlinse L und der Werkzeug-Drehachse C' des Fingerfräsers W ergibt. Sodann wird der Fingerfräser W mittels der Frässpindel 52 drehend angetrieben und die Brillenlinse L durch Verfahren der Werkstückspindel 12 mittels der Linearantriebseinheit des Verstellmechanismus 26 entlang der Y-Achse an den Fingerfräser W heranbewegt, so dass dieser mit vorbestimmter Tiefe fräsend in die zweite Fläche cc der Brillenlinse L eintaucht, und zwar soweit, dass der Fingerfräser W die erste Fläche cx der Brillenlinse L zum Blockmaterial M hin "durchsticht". Nun wird die Brillenlinse L mittels der Werkstückspindel 12 langsam drehend angetrieben, so dass sich nach einer vollständigen Umdrehung der Brillenlinse L der umlaufende Einstich E gemäß den Fig. 2, 3 und 5 ergibt. Aufgrund der Rotation des Fingerfräsers W weist der umlaufende Einstich E an seinem dem Blockstück S nahen Grund einen rechtwinkligen Querschnitt auf, wie in Fig. 5 gezeigt.

In Fig. 5 ist ebenfalls ein Übergangsbereich H, H' zwischen dem Einstich E und der zweiten Fläche cc dargestellt, der vor dem Hauptschritt (iii) des Bearbeitens der Brillenlinse L mit geometrisch unbestimmter Schneide angefast oder abgerundet werden kann, wodurch scharfkantige Übergänge zwischen dem Einstich E und der zweiten Fläche cc vermieden werden, die im Hauptschritt (iii) der Bearbeitung mit geometrisch unbestimmter Schneide das Schleif- oder Polierwerkzeug beschädigen könnten.

In der vorbeschriebenen Verfahrensvariante mit Fräsprozess zur Erzeugung des Einstichs E kann dieser Übergangsbereich H, H' zwischen dem Einstich E und der zweiten Fläche cc mittels des Fingerfräsers W am Anfang und/oder Ende des Einstech-Unterschritts (ii.2) vorteilhaft mit angefast oder abgerundet werden. Hierfür ist - für den Fachmann ersichtlich - zu Beginn des Einstech-Unterschritts (ii.2), namentlich just dann, wenn der rotierende Fingerfräser W in die zweite Fläche cc der Brillenlinse L eintaucht und/oder am Ende des Einstech-Unterschritts (ii.2), und zwar dann, wenn der rotierende Fingerfräser W fast vollständig aus dem gerade erzeugten Einstich E herausgezogen wurde, eine geeignete kombinierte Bewegung der Brillenlinse L in den drei Achsen A, B und Y notwendig.

Wenngleich beide Teilabschnitte H bzw. H' des Übergangsbereichs prinzipiell am Anfang oder am Ende des Einstech-Unterschritts (ii.2) durch den Fingerfräser W erzeugt werden können, ist es im Hinblick auf kurze Bearbeitungszeiten bevorzugt, wenn ein Teilabschnitt H bzw. H' des Übergangsbereichs am Anfang und der andere Teilabschnitt H' bzw. H am Ende des Einstech-Unterschritts (ii.2) mit dem Fingerfräser W angearbeitet wird, weil - im Vergleich zu einer Erzeugung beider Teilabschnitte H und H' des Übergangsbereichs am Anfang oder am Ende des Einstech-Unterschritts (ii.2) - bei der Bewegung der rotierenden Brillenlinse L in den A- und Y-Achsen zusätzliche Vorzeichenwechsel in der jeweiligen Bewegungsrichtung sowie Leerwege des Fingerfräsers W, also Werkzeugwege ohne Spanabhebung entbehrlich sind. Mit anderen Worten gesagt ist hier die Relativbewegung des Fingerfräsers W bezüglich der rotierenden Brillenlinse L dergestalt, dass der bearbeitungsaktive Teil des Fingerfräsers W infolge der Schwenkbewegung der Brillenlinse L um die Schwenkachse A entweder von radial außen (Teilabschnitt H') mit Pause nach radial innen (Teilabschnitt H) oder von radial innen (Teilabschnitt H) mit Pause nach radial außen (Teilabschnitt H') und aufgrund der Linearbewegung der Brillenlinse L entlang der Linearachse Y in Richtung des Blockstücks S zum Grund des Einstichs E und dann wieder davon weg stets mit spanabhebendem Werkstückeingriff wandert, ohne die Notwendigkeit einer zusätzlichen Bewegungsumkehr in der jeweiligen Achsenbewegung.

Für den Fachmann ist ebenfalls ersichtlich, dass es bei der Verfahrensvariante mit Fräsprozess zur Erzeugung des Einstichs E nach Zustellung des Fingerfräsers W durch geeignete kombinierte Bewegung der Brillenlinse L in wenigstens den zwei Achsen A und B möglich ist, im Einstech-Unterschritt (ii.2) eine Randkontur R an der Brillenlinse L zu erzeugen, die ggf. bis auf ein geringfügiges Übermaß der Umfassungs- bzw. Innenumfangskontur einer Fassung für die Brillenlinse L entspricht. Weicht die Umfassungskontur der Fassung - wie es meistens der Fall ist - von der Kreisform ab, so erfordert die Erzeugung einer entsprechenden Randkontur R an der Brillenlinse L freilich während einer Umdrehung der Brillenlinse L um die Werkstück-Drehachse B in Abhängigkeit von der Umfassungskontur der Fassung für die Brillenlinse L zwei Richtungswechsel bei der Schwenkbewegung um die Schwenkachse A (bei ovalen Geometrien), wenn nicht mehr (z.B. vier Richtungswechsel im Falle einer im Wesentlichen rechteckigen Brillenlinse L).

Für die Verfahrensvariante der Erzeugung des stirnseitigen Einstichs E gemäß Fig. 4 im Einstech-Unterschritt (ii.2) unter Verwendung eines drehfest gehaltenen schmalen Drehmeißels V kann gemäß Fig. 9 als weitere Bearbeitungseinheit zur Erzeugung des Einstichs E eine weitere Dreh-Bearbeitungseinheit 64 vorgesehen sein, die einen Werkzeughalter 66 mit einer Werkzeugaufnahme 68 zur starren Befestigung des Drehmeißels V aufweist. Die Werkzeugaufnahme 68 ist hierbei bezüglich des Maschinengestells 32 auf einer solchen Höhe angeordnet, dass sich eine Mittelachse 70 des Drehmeißels V in der durch die rotativen Achsen A und B definierten Schwenkebene der Werkstückspindel 12 befindet.

Der Werkzeughalter 66 ist ferner über einen Flansch 72 an einer Konsole 74 angeflanscht, die - analog der Fräsvariante gemäß Fig. 8 - ihrerseits auf der Flanschfläche 36 des Maschinengestells 32 sitzt und an dieser befestigt ist. Zwischen dem Flansch 72 und der Konsole 74 ist wiederum nahe der Werkzeugaufnahme 68 ein Stift (nicht gezeigt) eingefügt, um den der Flansch 72 und somit der Werkzeughalter 66 insgesamt bezüglich der Konsole 74 verschwenkt werden kann. Auch hier ist bei 76 eine Schraubverbindung mit Langloch sowie eine Skala 78 an der Konsole 74 angedeutet, womit die Mittelachse 70 des Drehmeißels V bezüglich der Schwenkachse A der Werkstückspindel 12 justiert werden kann bevor der Flansch 72 an der Konsole 74 festgemacht wird.

Weitere Details zum Drehmeißel V sind den Fig. 10 bis 13 zu entnehmen. Der aus einem zylindrischen Grundkörper gefertigte Drehmeißel V weist einen vornehmlich zylindrisch belassenen Schaftabschnitt 80 zur Aufnahme in einer Bohrung der Werkzeugaufnahme 68 und einen Schneidenabschnitt 82 auf. Der Schaftabschnitt 80 hat zur axialen Fixierung des Drehmeißels V in der Werkzeugaufnahme 68 eine bezüglich der Mittelachse 70 in Richtung des Schneidenabschnitts 82 geneigte bzw. abfallende, plane Klemmfläche 84, die dafür sorgt, dass eine gegen die Klemmfläche 84 geschraubte Klemmschraube (bei 86 in Fig. 9) neben einer radialen Kraftkomponente eine zusätzliche axiale Kraftkomponente in Richtung einer vom Schneidenabschnitt 82 abgewandten Stirnseite 88 des Drehmeißels V erzeugt. Zur Ausrichtung und drehfesten Fixierung in der Werkzeugaufnahme 68 ist an der Stirnseite 88 des Drehmeißels V eine V-förmige Nut 90 ausgebildet, deren Flanken an einem quer zur Werkzeugaufnahme 68 verlaufenden Querstift (in Fig. 9 nicht zu sehen) zur Anlage kommen.

Der Schneidenabschnitt 82 des Drehmeißels V weist an den zylindrischen Grundkörper angearbeitete, ebene Flächen auf, nämlich eine Spanfläche 92 und drei Freiflächen 94, 96 und 98. Wie am besten in der Draufsicht gemäß Fig. 12 zu erkennen ist, sind die Freiflächen 94, 96 und 98 so zur Spanfläche 92 angeordnet, dass sich an deren vom Schaftabschnitt 80 abgewandten Ende eine schräg zur Mittelachse 70 des Drehmeißels V verlaufende Schneidkante 100 ergibt, deren vorderster Punkt auf der Mittelachse 70 des Drehmeißels V liegt. Gemäß Fig. 12 erstreckt sich der Schneidenabschnitt 82 nur auf einer Seite der Mittelachse 70 vom Schaftabschnitt 80 weg und ist zu den Seiten durch die am besten in den Fig. 11 und 13 erkennbaren Freiflächen 94, 96 begrenzt. Diesen Figuren ist ebenfalls zu entnehmen, dass die Spanfläche 92 von der Schneidkante 100 zum Schaftabschnitt 80 hin ansteigt. Aus der Draufsicht gemäß Fig. 12 ergibt sich ferner, dass die seitlichen Freiflächen 94, 96 den Schneidenabschnitt 82 in Richtung des Schaftabschnitts 80 verjüngen, um einem Verklemmen des Drehmeißels V beim Einstechen vorzubeugen.

Der Winkel der Schneidkante 100 zur Mittelachse 70 des Drehmeißels V ist nach Maßgabe einer mittleren Krümmung der ersten Fläche cx der Brillenlinsen L so gewählt, dass die Schneidkante 100 bei Erzeugung des Einstichs E mit "Durchstechen" der ersten Fläche cx der Brillenlinse L so wenig wie möglich Blockmaterial M zerspant. Dies ist insbesondere dann vorteilhaft, wenn als Blockmaterial M sogenanntes "Alloy" verwendet wird, das als in der Regel Wismut-basierte metallische Legierung giftig und zudem teuer ist.

Die räumliche Lage der stirnseitigen, dritten Freifläche 98 ergibt sich dann aus dem gewünschten Verlauf der Schneidkante 100 bezüglich der Mittelachse 70 des Drehmeißels V (siehe oben und Fig. 12) und dem Freiwinkel (in den Fig. 11 und 13 zwischen der Freifläche 98 und einer Senkrechten zur Mittelachse 70), der sich wiederum in Abhängigkeit von den für den jeweiligen Werkstoff der Brillenlinse L erforderlichen Span- und Keilwinkeln an der Schneidkante 100 ergibt.

Bei der in Fig. 9 dargestellten Ausgestaltung der Maschine 10 mit einer zusätzlichen Dreh-Bearbeitungseinheit 64 läuft der Einstech-Unterschritt (ii.2) im Wesentlichen wie oben zu der Fräsvariante unter Bezugnahme auf die Fig. 8 beschrieben ab, insbesondere was die Zustell- und Vorschubbewegungen in den A- und Y-Achsen der Werkstückspindel 12 angeht. Hierbei ist die Geschwindigkeit der Drehbewegung der Brillenlinse L um die Werkstück-Drehachse B allerdings so zu wählen, dass sich eine für eine ordnungsgemäße Drehspanbildung hinreichende Relativgeschwindigkeit der Schneidkante 100 über der Brillenlinse L ergibt. Dies begrenzt natürlich auch die Möglichkeiten, in einem Drehprozess einen Einstich E zu erzeugen, der zu einer Randkontur R an der Brillenlinse L führt, die von der Kreisform abweicht.

Am Grund des Einstichs E ergibt sich gemäß Fig. 4 bedingt durch die winkelmäßige Anstellung der Schneidkante 100 des Drehmeißels V die im Querschnitt gesehen im Wesentlichen dreieckige Kontur, mit dem Vorteil gegenüber der Fräsvariante von Fig. 5, dass bei Erzeugung des Einstichs E deutlich weniger Blockmaterial M zerspant wird.

Was die ebenfalls in Fig. 4 dargestellten Übergangsbereiche H, H' zwischen dem Einstich E und der zweiten Fläche cc der Brillenlinse L angeht, ist vorzugsweise vorgesehen, dass diese mittels des Drehwerkzeugs D an dem Fast-Tool-Servo 18 bzw. 20 im Dreh-Unterschritt (ii.3), d.h. nach dem Einstech-Unterschritt (ii.2) angefast oder abgerundet werden, weil deren Ausbildung mit der Schneidengeometrie des Drehmeißels V Probleme bereiten könnte.

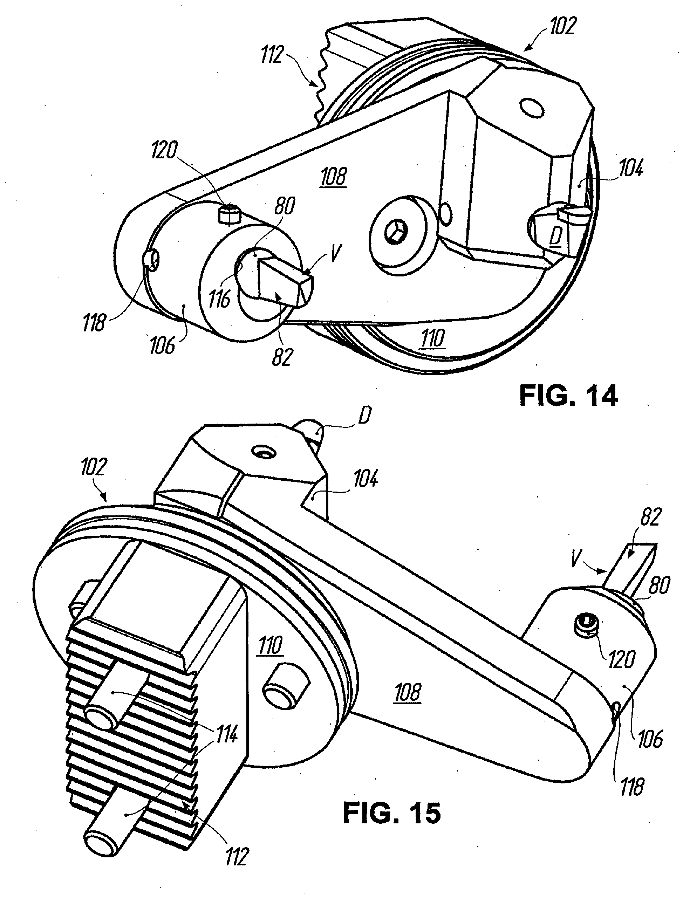

Die Fig. 14 und 15 veranschaulichen schließlich eine vorrichtungstechnische Variante für die Erzeugung des stirnseitigen Einstichs E gemäß Fig. 4 mit einem Drehprozess im Einstech-Unterschritt (ii.2) von Fig. 1.

Demgemäß ist ein an sich bekannter Werkzeughalter 102 zur Befestigung des Drehmeißels D an dem Fast-Tool-Servo 18 bzw. 20 der Maschine 10 gemäß den Fig. 6 und 7 seitlich neben der üblichen Drehmeißelaufnahme 104 für den Drehmeißel D zur Flächenbearbeitung der Brillenlinse L mit einer zweiten Drehmeißelaufnahme 106 für den in den Fig. 10 bis 13 gezeigten schmalen Drehmeißel V zur Erzeugung des Einstichs E versehen. Hierzu weist der Werkzeughalter 102 einen Armabschnitt 108 auf, der die Drehmeißelaüfnahmen 104, 106 miteinander und mit einem Grundkörper 110 des Werkzeughalters 102 starr verbindet. Der Grundkörper 110 ist in an sich bekannter Weise auf seiner Rückseite mit einer Verzahnung 112 versehen, die mit einer komplementären Profilierung bzw. Verzahnung (nicht gezeigt) am bewegten Teil des Fast-Tool-Servos 18 bzw. 20 eingreifen kann, um den Werkzeughalter 102 an dem bewegten Teil auch formschlüssig festzulegen, neben einer Verbindung durch in Fig. 15 angedeutete Schrauben 114.

In einer Bohrung 116 der zweiten Drehmeißelaufnahme 106 ist der Drehmeißel V mit seinem Schaftabschnitt 80 aufgenommen, so dass der Schneidenabschnitt 82 des Drehmeißels V von der Drehmeißelaufnahme 106 vorsteht. Hierbei ist der Drehmeißel V durch einen Querstift bei 118, an dem die V-förmige Nut 90 (vgl. die Fig. 10, 11 und 13) mit ihren Flanken anliegt, gegen ein Verdrehen in der Drehmeißelaufnahme 106 gesichert, während eine in eine Gewindebohrung der Drehmeißelaufnahme 106 eingeschraubte Klemmschraube 120 an der Klemmfläche 84 des Drehmeißels V (siehe wiederum die Fig. 10 bis 13) angreift, um den Drehmeißel V in der Drehmeißelaufnahme 106 axial zu fixieren.

Mit einer solchen Ausgestaltung des Werkzeughalters 102 kann auf die in Fig. 9 gezeigte, zusätzliche Dreh-Bearbeitungseinheit 64 an der Maschine 10 verzichtet werden. Für den Fachmann ist ersichtlich, dass es somit möglich ist, den stirnseitigen Einstich E gemäß Fig. 4 mit der an sich bekannten Drehprozess-Kinematik der Maschine 10 (Bewegungen in den Achsen A, B, Y und ggf. F1 bzw. F2) zu erzeugen.

Ein Verfahren zur Bearbeitung von Werkstücken mit einer ersten und einer davon abgewandten zweiten Fläche umfasst die folgenden Hauptschritte: (i) Blocken des Werkstücks vermittels eines Blockmaterials auf einem Blockstück als Bearbeitungshandhabe, mit dem Blockmaterial zwischen Blockstück und erster Fläche, (ii) Bearbeiten des Werkstücks mit geometrisch bestimmter Schneide an der zweiten Fläche zur Erzielung der gewünschten Makrogeometrie, (iii) Bearbeiten des Werkstücks mit geometrisch unbestimmter Schneide (Polierwerkzeuge) an der zweiten Fläche zur Erzielung der gewünschten Mikrogeometrie, und (iv) Abblocken des Werkstücks vom Blockstück. Der Hauptschritt (ii) umfasst hierbei einen Einstech-Unterschritt (ii.2), bei dem mit geometrisch bestimmter Schneide ausgehend von der zweiten Fläche ein umlaufender Einstich erzeugt wird, der durch die erste Fläche hindurch bis ins Blockmaterial hineinreicht, so dass auf dem Blockstück radial innerhalb des Einstichs das Werkstück mit vorbestimmter Randkontur verbleibt. Radial außerhalb des Einstichs entsteht ein Restring, der im Hauptschritt (iii) insbesondere für eine gute Randabstützung der Polierwerkzeuge sorgt.

### BEZUGSZEICHENLISTE

- 10: Maschine
- 12: Werkstückspindel
- 14: Dreh-Bearbeitungseinheit
- 16: Dreh-Bearbeitungseinheit
- 18: Fast-Tool-Servo
- 20: Fast-Tool-Servo
- 22: Fräs-Bearbeitungseinheit
- 24: Werkzeugspindel
- 26: Verstellmechanismus
- 28: Ausnehmung
- 30: Oberseite
- 32: Maschinengestell
- 34: Arbeitsraum
- 36: Flanschfläche
- 38: Transporteinrichtung
- 40: Arbeitskasten
- 42: Lade/Entlade-Station
- 44: Lademechanismus
- 46: Messstation
- 48: Schaltschrank
- 50: Fräs-Bearbeitungseinheit
- 52: Frässpindel
- 54: Werkzeugaufnahme
- 56: Flansch
- 58: Konsole
- 60: Schraubverbindung mit Langloch
- 62: Skala
- 64: Dreh-Bearbeitungseinheit
- 66: Werkzeughalter
- 68: Werkzeugaufnahme
- 70: Mittelachse
- 72: Flansch
- 74: Konsole
- 76: Schraubverbindung mit Langloch
- 78: Skala
- 80: Schaftabschnitt
- 82: Schneidenabschnitt
- 84: Klemmfläche
- 86: Klemmschraube
- 88: Stirnseite
- 90: Nut
- 92: Spanfläche
- 94: Freifläche
- 96: Freifläche
- 98: Freifläche
- 100: Schneidkante
- 102: Werkzeughalter
- 104: Drehmeißelaufnahme
- 106: Drehmeißelaufnahme
- 108: Armabschnitt
- 110: Grundkörper
- 112: Verzahnung
- 114: Schraube
- 116: Bohrung
- 118: Querstift
- 120: Klemmschraube

- cc: zweite Fläche
- cx: erste Fläche

- A: Schwenkachse
- B: Werkstück-Drehachse (winkellagegeregelt)
- C, C': Werkzeug-Drehachse (drehzahlgesteuert)
- D: Drehmeißel / Drehwerkzeug
- E: Einstich
- F1: Linearachse 1. Fast-Tool-Servo (lagegeregelt)
- F2: Linearachse 2. Fast-Tool-Servo (lagegeregelt)
- G: Fräswerkzeug
- H, H': Übergangsbereich
- K: Restring
- L: optisches Werkstück / Brillenlinse
- M: Blockmaterial
- R: Randkontur
- S: Blockstück
- V: schmaler Drehmeißel
- W: Fingerfräser
- Y: Linearachse Werkstück (lagegeregelt)

## Patentansprüche

1. Verfahren zur Bearbeitung von optischen Werkstücken (L), insbesondere Brillenlinsen aus Kunststoff, welche eine erste Fläche (cx) und eine davon abgewandte zweite Fläche (cc) aufweisen, die zu bearbeiten ist, mit den folgenden, in der angegebenen Reihenfolge ablaufenden Hauptschritten:
(i) Blocken des Werkstücks (L) vermittels eines Blockmaterials (M) auf einem Blockstück (S) als Handhabe bei der Bearbeitung, so dass sich das Blockmaterial (M) zwischen dem Blockstück (S) und der ersten Fläche (cx) des Werkstücks (L) befindet,
(ii) Bearbeiten des Werkstücks (L) mit geometrisch bestimmter Schneide zur Erzielung der gewünschten Makrogeometrie an der zweiten Fläche (cc) des Werkstücks (L),
(iii) Bearbeiten des Werkstücks (L) mit geometrisch unbestimmter Schneide zur Erzielung der gewünschten Mikrogeometrie an der zweiten Fläche (cc) des Werkstücks (L) und
(iv) Abblocken des Werkstücks (L) von dem Blockstück (S),
**dadurch gekennzeichnet, dass** der Hauptschritt (ii) des Bearbeitens des Werkstücks (L) mit geometrisch bestimmter Schneide einen Einstech-Unterschritt (ii.2) umfasst, bei dem mit geometrisch bestimmter Schneide ausgehend von der zweiten Fläche (cc) ein umlaufender Einstich (E) erzeugt wird, der durch die erste Fläche (cx) hindurch bis ins Blockmaterial (M) hineinreicht, so dass auf dem Blockstück (S) radial innerhalb des Einstichs (E) das Werkstück (L) mit einer vorbestimmten Randkontur (R) und radial außerhalb des Einstichs (E) ein Restring (K) zur Werkzeugabstützung im Hauptschritt (iii) verbleibt.

2. Verfahren nach Anspruch 1, bei dem der Hauptschritt (ii) des Bearbeitens des Werkstücks (L) mit geometrisch bestimmter Schneide die folgenden weiteren Unterschritte umfasst:
(ii.1) Fräsen des Werkstücks (L) an der zweiten Fläche (cc) mittels eines Fräswerkzeugs (G) zur Erzielung der gewünschten groben Makrogeometrie und
(ii.3) Drehen des Werkstücks (L) an der zweiten Fläche (cc) mittels eines Drehwerkzeugs (D) zur Erzielung der gewünschten feinen Makrogeometrie,
**dadurch gekennzeichnet, dass** der Einstech-Unterschritt (ii.2) zwischen dem Fräs-Unterschritt (ii.1) und dem Dreh-Unterschritt (ii.3) stattfindet.

3. Verfahren nach Anspruch 1 oder 2, **dadurch gekennzeichnet, dass** für die Erzeugung des Einstichs (E) im Einstech-Unterschritt (ii.2) ein drehfest gehaltener schmaler Drehmeißel (V) verwendet wird.

4. Verfahren nach Anspruch 1 oder 2, **dadurch gekennzeichnet, dass** für die Erzeugung des Einstichs (E) im Einstech-Unterschritt (ii.2) ein drehend angetriebener Fingerfräser (W) verwendet wird.

5. Verfahren nach einem der vorhergehenden Ansprüche, **dadurch gekennzeichnet, dass** vor dem Hauptschritt (iii) des Bearbeitens des Werkstücks (L) mit geometrisch unbestimmter Schneide ein Übergangsbereich (H, H') zwischen dem Einstich (E) und der zweiten Fläche (cc) angefast oder abgerundet wird.

6. Verfahren nach den Ansprüchen 2 und 5, **dadurch gekennzeichnet, dass** der Übergangsbereich (H, H') zwischen dem Einstich (E) und der zweiten Fläche (cc) mittels des Drehwerkzeugs (D) im Dreh-Unterschritt (ii.3) angefast oder abgerundet wird.

7. Verfahren nach den Ansprüchen 4 und 5, **dadurch gekennzeichnet, dass** der Übergangsbereich (H, H') zwischen dem Einstich (E) und der zweiten Fläche (cc) mittels des Fingerfräsers (W) am Anfang und/oder Ende des Einstech-Unterschritts (ii.2) angefast oder abgerundet wird.

8. Verfahren nach einem der vorhergehenden Ansprüche, **dadurch gekennzeichnet, dass** im Einstech-Unterschritt (ii.2) eine Randkontur (R) am Werkstück (L) erzeugt wird, die ggf. bis auf ein geringfügiges Übermaß der Umfassungskontur einer Fassung für das Werkstück (L) entspricht.

## Claims

1. Method of processing optical workpieces (L), particularly spectacle lenses of plastic, having a first surface (cx) and a second surface (cc) which faces away therefrom and is to be processed, comprising the following principal steps carried out in the indicated sequence:
(i) blocking the workpiece (L) with the aid of a blocking material (M) on a blocking member (S) as holder during the processing so that the blocking material (M) is located between the blocking member (S) and the first surface (cx) of the workpiece (L),
(ii) processing the workpiece (L) by a geometrically defined cutting edge for achieving the desired macrogeometry at the second surface (cc) of the workpiece (L),
(iii) processing the workpiece (L) by a geometrically undefined cutting edge for achieving the desired microgeometry at the second surface (cc) of the workpiece (L) and
(iv) deblocking the workpiece (L) from the blocking member (S),
**characterized in that** the principal step (ii) of processing of the workpiece (L) by a geometrically defined cutting edge comprises a plunge-cutting sub-step (ii.2) in which by a geometrically defined cutting edge starting from the second surface (cc) an encircling plunge cut (E) is produced which extends through the first surface (cx) into the blocking material (M) so that, on the blocking member (S), the workpiece (L) with a predetermined edge profile (R) remains radially within the plunge cut (E) and a residual ring (K) for tool support in the principal step (iii) remains radially outside the plunge cut (E).

2. Method according to claim 1, in which the principal step (ii) of processing of the workpiece (L) by a geometrically defined cutting edge comprises the following further substeps:
(ii.1) milling of the workpiece (L) at the second surface (cc) by a milling tool (G) for achieving the desired coarse macrogeometry and
(ii.3) turning the workpiece (L) at the second surface (cc) by a turning tool (D) for achieving the desired fine macrogeometry,
**characterized in that** the plunge-cutting sub-step (ii.2) is carried out between the milling sub-step (ii.1) and the turning sub-step (ii.3).

3. Method according to claim 1 or 2, **characterized in that** a narrow turning chisel (V) mounted to be secure against rotation is used for producing the plunge cut (E) in the plunge-cutting sub-step (ii.2).

4. Method according to claim 1 or 2, **characterized in that** a rotationally driven end mill (W) is used for producing the plunge cut (E) in the plunge-cutting sub-step (ii.2).

5. Method according to any one of the preceding claims, **characterized in that** prior to the principal step (iii) of processing of the workpiece (L) by a geometrically undefined cutting edge a transition region (H, H') between the plunge cut (E) and the second surface (cc) is chamfered or radiused.

6. Method according to claims 2 and 5, **characterized in that** the transition region (H, H') between the plunge cut (E) and the second surface (cc) is chamfered or radiused by the turning tool (D) in the turning sub-step (ii.3).

7. Method according to claims 4 and 5, **characterized in that** the transition region (H, H') between the plunge cut (E) and the second surface (cc) is chamfered or radiused by the end mill (W) at the start and/or end of the plunge-cutting sub-step (ii.2).

8. Method according to any one of the preceding claims, **characterized in that** in the plunge-cutting sub-step (ii.2) an edge profile (R) is produced at the workpiece (L) which corresponds with the external profile of a mount for the workpiece (L) optionally apart from a small allowance.

## Revendications

1. Procédé d'usinage de pièces optiques (L), en particulier de verres de lunettes en matière plastique, lesquelles présentent une première surface (cx) et une deuxième surface (cc) opposée à celle-ci, qui doit être usinée, comprenant les étapes principales suivantes se déroulant dans l'ordre indiqué :
(i) le glantage de la pièce (L) au moyen d'un matériau de glantage (M) sur une molette de glantage (S) en tant que manipulation lors du glantage, de sorte que le matériau de glantage (M) se situe entre la molette de glantage (S) et la première surface (cx) de la pièce (L),
(ii) l'usinage de la pièce (L) au moyen d'un tranchant géométriquement défini pour obtenir la macro-géométrie souhaitée sur la deuxième surface (cc) de la pièce (L),
(iii) l'usinage de la pièce (L) au moyen d'un tranchant géométriquement non défini pour obtenir la micro-géométrie souhaitée sur la deuxième surface (cc) de la pièce (L) et
(iv) le déglantage de la pièce (L) de la molette de glantage (S),
**caractérisé en ce que** l'étape principale (ii) de l'usinage de la pièce (L) au moyen du tranchant géométriquement défini comporte une sous-étape d'entaillage (ii.2), pour laquelle une entaille (E) périphérique, qui parvient jusque dans le matériau de glantage (M) en traversant la première surface (cx), est pratiquée à partir de la deuxième surface (cc) au moyen du tranchant géométriquement défini, de sorte que sur la molette de glantage (S), la pièce (L) présentant un contour marginal (R) prédéfini reste radialement à l'intérieur de l'entaille (E) et qu'un anneau résiduel (K) reste radialement à l'extérieur de l'entaille (E) pour servir d'appui à l'outil à l'étape principale (iii).

2. Procédé selon la revendication 1, selon lequel l'étape principale (ii) de l'usinage de la pièce (L) au moyen du tranchant géométriquement défini comporte les autres sous-étapes suivantes :
(ii.1) le fraisage de la pièce (L) sur la deuxième surface (cc) au moyen d'un outil de fraisage (G) pour obtenir la macro-géométrie grossière souhaitée et
(ii.3) l'amenée en rotation de la pièce (L) sur la deuxième surface (cc) au moyen d'un outil rotatif (D) pour obtenir la macro-géométrie fine souhaitée,
**caractérisé en ce que** la sous-étape d'entaillage (ii.2) se situe entre la sous-étape de fraisage (ii.1) et la sous-étape d'amenée en rotation (ii.3).

3. Procédé selon la revendication 1 ou 2, **caractérisé en ce qu'**un outil de tournage (V) étroit retenu solidaire en rotation est utilisé pour la pratique de l'entaille (E) à la sous-étape d'entaillage (ii.2).

4. Procédé selon la revendication 1 ou 2, **caractérisé en ce qu'**une fraise à queue (W) entraînée en rotation est utilisée pour la pratique de l'entaille (E) à la sous-étape d'entaillage (ii.2).

5. Procédé selon l'une des revendications précédentes, **caractérisé en ce qu'**avant l'étape principale (iii) de l'usinage de la pièce (L) au moyen du tranchant géométriquement non défini, une zone de transition (H, H') entre l'entaille (E) et la deuxième surface (cc) est chanfreinée ou arrondie.

6. Procédé selon l'une des revendications 2 et 5, **caractérisé en ce que** la zone de transition (H, H') entre l'entaille (E) et la deuxième surface (cc) est chanfreinée ou arrondie au moyen de l'outil rotatif (D) à la sous-étape d'amenée en rotation (ii.3).

7. Procédé selon les revendications 4 et 5, **caractérisé en ce que** la zone de transition (H, H') entre l'entaille (E) et la deuxième surface (cc) est chanfreinée ou arrondie au moyen de la fraise à queue (W) au début et/ou à la fin de la sous-étape d'entaillage (ii.2).

8. Procédé selon l'une des revendications précédentes, **caractérisé en ce qu'**un contour marginal (R), qui correspond éventuellement jusqu'à un léger surdimensionnement au contour périphérique d'un châssis-support pour la pièce (L), est pratiqué à la sous-étape d'entaillage (ii.2).
